# FASCICULE DE BREVET EUROPEEN

(11) **EP 0 809 475 B1**
(45) Date de publication et mention de la délivrance du brevet: **12.01.2000**
(21) Numéro de dépôt: 96904151.6
(22) Date de dépôt: 16.02.1996
(51) Int. Cl.: A61C 5/04, A61C 13/30

(54) **RENFORT DENTAIRE AUTOBLOQUANT**
SELBSTHAFTENDE ZAHNÄRZTLICHE VERSTÄRKUNG
SELF-LOCKING DENTAL POST

(30) Priorité: 17.02.1995 FR 9501870
(43) Date de publication de la demande: 03.12.1997
(73) Titulaire: SOCIETE DE RECHERCHES TECHNIQUES DENTAIRES R.T.D., 38120 Saint-Egrève (FR)
(72) Inventeur: REYNAUD, Marc, F-38240 Meylan (FR); REYNAUD, Pierre-Luc, F-38120 Saint-Egrève (FR); CHU, Manh, F-38120 Saint-Egrève (FR)
(74) Mandataire: Bruder, Michel
(86) Numéro de dépôt international: FR9600254
(87) Numéro de publication internationale: WO9625119

(56) Documents cités:
- DE-A- 3 825 601
- FR-A- 2 493 698
- FR-A- 2 669 211
- US-A- 1 397 067
- US-A- 4 696 646

## Description

La présente invention concerne un renfort dentaire, et notamment un tenon, dont la forme externe est apte à épouser la forme d'une cavité, ou du canal, d'une dent où l'on souhaite le fixer.

On sait qu'en odontologie on utilise des tenons en métal ou en matériau composite pour réaliser une reconstitution d'une dent dépulpée.

Ces tenons, quelle que soit leur constitution, ont une section droite circulaire, si bien que lorsqu'on les met en place dans des canaux dentaires dont la section droite est de forme différente ils ne viennent en appui que par une faible partie de leur surface externe contre la paroi interne de la dent. Le blocage mécanique du tenon n'est donc pas assuré de façon efficace, si bien que l'on est parfois contraint de parfaire le blocage en introduisant dans les espaces libres existant entre la dent et le tenon des produits de reconstitution ou de scellement divers.

En fait, lorsque le praticien souhaite disposer d'un ajustement parfait du tenon dans un canal dentaire ovoïde, il est contraint de prendre une empreinte canalaire de grande précision, par exemple en silicone, et de faire réaliser par un laboratoire de prothèse un tenon dit anatoforme en métal coulé, ce qui présente l'inconvénient d'être onéreux et de nécessiter trois opérations successives sources d'imprécisions, à savoir la prise d'une empreinte de grande précision, la réalisation dans cette empreinte d'un tenon en cire et finalement la coulée de ce tenon en métal avec le risque de surdimentionnement à la coulée.

On a proposé dans le brevet FR-A-2.669.211 de combler les volumes qui existent entre le tenon et le canal dentaire par une injection de résine durcissable qui assure par ailleurs la solidarisation du tenon avec le canal. Un inconvénient de cette technique est que le retrait qui se produit dans la résine au cours du durcissement de celle-ci est d'autant plus important que la masse de résine est grande. Dans ces conditions, le retrait qui se produit en différents endroits du canal dentaire est important et crée des zones dans lesquelles le collage n'est pas satisfaisant.

On connaît également dans le document DE-A-3 825 601 un tenon dentaire qui est pourvu à sa partie supérieure d'une portion tronconique constituant un faux moignon de plus grand diamètre, et qui est destiné à réaliser une reconstitution d'une dent détériorée. Ce tenon dentaire prend place dans le canal radiculaire de la dent et est constitué d'un produit de synthèse renfermant des fibres pouvant être des fibres de carbone ou des fibres de verre. Un tel tenon est fixé dans le canal radiculaire de la dent par des moyens de collage, ou scellement. Un tel dispositif présente des inconvénients, similaires à ceux, relevés dans le document mentionné précédemment.

La présente invention a pour but de palier de tels inconvénients. La présente invention se propose ainsi d'améliorer à la fois la facilité et la qualité de mise en place d'un renfort dans une cavité dentaire. La présente invention a notamment pour but de proposer un renfort dentaire qui soit en mesure d'épouser la forme de la cavité, ou du canal dentaire, où on souhaite le disposer.

La présente invention a ainsi pour objet un renfort dentaire définitif destiné à être mis en place, notamment, dans une cavité dentaire, du type comportant une âme rigide longitudinale, dont au moins la partie destinée à être fixée dans ladite cavité, est revêtue, au moins en périphérie, d'un produit durcissable apte à adhérer à l'âme et caractérisé en ce que le produit est apte à fluer sous l'action d'une contrainte, de façon à épouser la forme des parois de la cavité dans laquelle il est mis en place, ce produit étant apte à durcir, après son introduction dans ladite cavité, de façon que ledit renfort soit apte à être retiré de ladite cavité.

Suivant l'invention le renfort peut être constitué notamment d'un tenon, ou d'un taux moignon adaptable sur un tenon solidarisé d'une dent. Le renfort peut également être constitué d'une pièce unique formant à la fois le tenon et le faux moignon.

Dans un mode de mise en oeuvre de l'invention les moyens de rigidité longitudinale sont constitués par un noyau rigide formé notamment de fibres longues noyées dans une résine de synthèse. De telles fibres peuvent, de préférence, être transparentes et on fera ainsi appel notamment à des fibres de verre ou de quartz, ou à des fibres optiques.

Dans un autre mode de mise en oeuvre de l'invention, ledit renfort est de type durcissable par polymérisation sous l'action d'un rayonnement lumineux. Ce mode de mise en oeuvre est particulièrement intéressant en ce qu'il permet au praticien de disposer de tout le temps qui lui est nécessaire pour mettre en place le renfort dans la dent de son patient et faire fluer, au cours de cette mise en place, le produit durcissable dans la cavité dentaire qu'il est destiné à remplir.

Suivant l'invention le produit peut également être de type durcissable par réaction chimique ou sous l'action d'un rayonnement haute fréquence, ou de micro-ondes.

La présente invention a également pour objet un procédé de fabriction d'un renfort dentaire dans une cavité dentaire, comportant les étapes suivantes:
- recouvrir, au moins en périphérie un élément rigide longitudinal avec un produit durcissable caractérisé en ce qu'il est en mesure de fluer sous l'action d'une contrainte,
- disposer ledit renfort ainsi constitué à l'intérieur de la cavité de façon à faire fluer ledit produit sous l'action de la contrainte résultant de la mise en place du renfort dans la cavité, de façon que celui-ci épouse la forme des parois de la cavité dans laquelle il est mis en place,
- provoquer un durcissement au moins partiel dudit produit,
- retirer de la cavité ledit renfort.

Dans un mode de mise en oeuvre de l'invention on complètera ledit durcissement après le retrait du renfort de la cavité, notamment dans un four.

Un tel procédé permet de terminer le durcissement dudit produit externe à l'élément de rigidité longitudinal du renfort, à l'extérieur de la cavité de la dent, et notamment dans un four, ce qui permet de contrôler de façon rigoureuse l'opération de durcissement, ce qui permet de conférer au renfort de grandes qualités de rigidité.

On décrira ci-après, à titre d'exemple non limitatif, une forme d'exécution de la présente invention, en référence au dessin annexé sur lequel :
La figure 1 est une vue en coupe axiale et longitudinale d'un renfort suivant l'invention, constitué d'un tenon mis en place dans un canal dentaire.
La figure 2 est une vue en coupe transversale du tenon représenté sur la figure 1 suivant la ligne II-II de celle-ci.
La figure 3 est une vue en coupe axiale et longitudinale d'une variante de mise en oeuvre d'un renfort suivant l'invention constituée d'un tenon.
La figure 4 est une vue en coupe axiale et longitudinale d'une autre variante de mise en oeuvre d'un renfort suivant l'invention constituée d'un tenon.
La figure 5 est une vue en coupe axiale et longitudinale d'un renfort suivant l'invention, constitué d'un faux moignon, avant la mise en place de celui-ci sur un tenon solidarisé d'une dent.
La figure 6 est une vue en coupe axiale et longitudinale d'une dent équipée du faux moignon représenté sur la figure 5.
La figure 7 est une vue en coupe axiale et longitudinale d'une variante de mise en oeuvre d'un renfort suivant l'invention, formant à la fois tenon et faux moignon avant sa mise en place dans une dent.
La figure 8 est une vue en coupe axiale et longitudinale du renfort représenté sur la figure 7 après sa mise en place sur la dent.

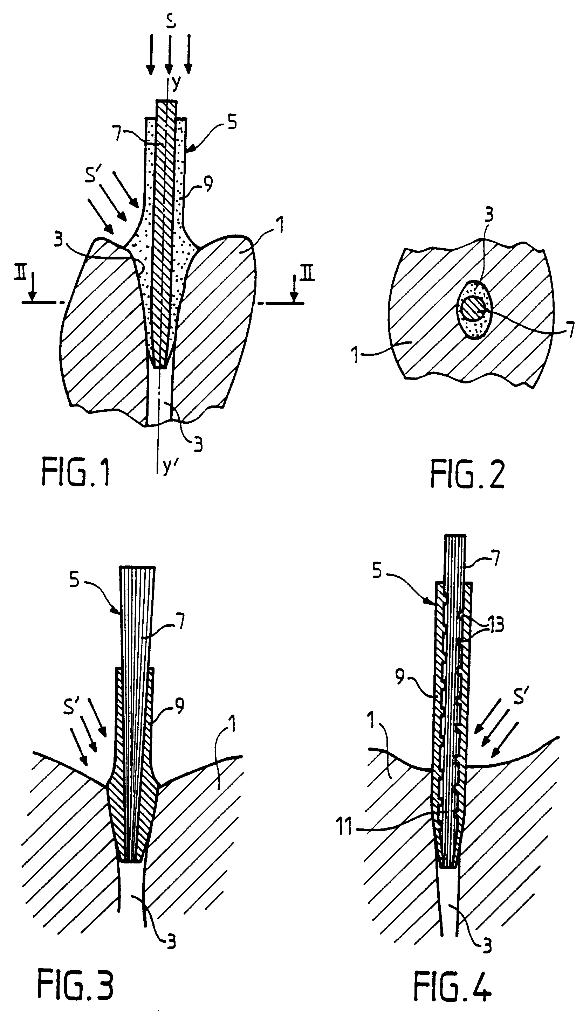

On a représenté sur la figure 1 une dent 1 comportant un canal ovoïde 3 dont on a agrandi la partie supérieure, de façon à y loger un tenon 5 suivant l'invention.

Le tenon 5 est constitué d'une âme centrale et longitudinale 7 d'axe yy' qui est transparente et qui est formée d'un faisceau de fibres longues, telles que des fibres de quartz ou de verre, qui sont noyées dans une matrice de résine durcissable, notamment une résine transparente telle qu'une résine époxy.

La périphérie de l'âme 7 est recouverte d'un produit malléable 9 possédant la propriété d'adhérer à l'âme 7 et de durcir sous l'action d'un rayonnement lumineux, et notamment d'un rayonnement dont la longueur d'onde est telle qu'il se situe dans le domaine de la lumière visible. Les produits de ce type sont parfaitement connus dans la technique dentaire et l'on pourra ainsi notamment utiliser une résine triéthylène glycol diméthacrylate (dite TEGDMA) ou une résine bisphénol aglycidyl diméthacrylate (dite BISGMA).

On donnera au produit durcissable 9 des caractéristiques telles qu'il puisse être déformé et fluer facilement lorsqu'on le soumet à une contrainte, de façon que, lorsque le tenon 5 prend place dans le canal 3, il puisse assurer le remplissage du volume vide autour de lui.

Afin de donner au produit durcissable la compacité nécessaire, on pourra lui ajouter des microcharges, notamment de la silice pyrogénée ou colloïdale, ce qui permettra de lui conférer des caractéristiques thixotropiques.

Par ailleurs on pourra également charger ledit produit durcissable, en plus des charges de silice, avec des charges telles que des libres courtes disposées et orientées de façon aléatoire dans ledit produit ou des fibres longues enroulées par exemple autour des moyens de rigidité axiale et longitudinale. On pourra également, en fonction des application spécifiques, ajouter au produit des macrocharges constituées notamment de particules de quartz ou de microsphères creuses de verre. De préférence, suivant l'invention, on introduira des charges dans le produit durcissable qui seront constituées de matériaux transparents. Suivant l'invention, les charges qu'elles soient constituées de silice ou de fibres, sont utilisées pour assurer le contrôle du caractère fluide et malléable du produit qui détermineront son fluage lors de la mise an place du tenon. Dans le présent exemple le produit est constitué d'un produit durcissable par photopolymérisation.

Dans ces conditions la mise en oeuvre de l'invention se fera ainsi que décrit ci-après.

Une fois que le praticien a terminé la préparation canalaire du canal dentaire 3, il introduit le tenon dans le canal dentaire 3. Sous l'effet de la force d'application nécessaire à la bonne mise en place du tenon 5, les parties du produit durcissable 9 qui rencontrent les parois du canal 3 fluent et viennent ainsi remplir les volumes vides compris entre le tenon 5 et la paroi interne du canal 3, ce qui permet de remplir des orifices de volume important notamment de forme ovoïdale, ainsi que représenté sur la figure 2. Après que le praticien a contrôlé la mise en place correcte du tenon 5, il éclaire l'extrémité externe de celui-ci à l'aide d'une source de lumière S, et notamment d'une source de rayons de longueur d'ondes du domaine visible, pendant le temps nécessaire au durcissement complet du produit 9. Les rayons lumineux suivent l'âme transparente 7 du tenon 5 pour éclairer sur leur passage et par l'intérieur la gaine externe de produit photopolymérisable 9, ce qui assure le durcissement de celui-ci.

Lorsque le produit durcissable 9 est de nature transparente, ainsi que précisé précédemment, le praticien peut alors réaliser la photopolymérisation du produit en éclairant directement la surface externe de celui-ci, ainsi que représenté sur la figure 1, avec une source de lumière S' disposée près de la jonction entre le tenon 5 et la surface de la dent 1. Cette disposition permet d'obtenir une action plus efficace du rayonnement lumineux sur le produit durcissable 9, dans la mesure ou le trajet du rayonnement à travers le tenon est plus faible.

Comme représenté sur la figure 3 il n'est pas nécessaire que le produit durcissable 9 soit disposé en épaisseur égale sur la totalité de la périphérie de l'âme centrale 7 du tenon 5. On pourra ainsi se limiter à ne disposer celui-ci que dans la partie dite canalaire du tenon 5, c'est à dire celle qui est destinée à prendre place dans le canal dentaire 3. Une telle disposition apporte une grande facilité d'emploi en ce qui concerne la préhension.

La mise en place du tenon à l'intérieur de la cavité dentaire peut également être réalisée ainsi que décrit ci-après. Dans une première étape, on dispose le tenon suivant l'invention dans le canal dentaire ainsi qu'exposé précédemment, si bien que les parties du produit durcissable qui rencontrent les parois du canal fluent sous l'influence de la contrainte et viennent épouser parfaitement la forme de ce canal. Dans une seconde étape, on provoque un durcissement du produit, qui peut être partiel, puis on retire le tenon de la cavité. A cet effet on pourra préalablement à la mise en place du tenon disposer dans la cavité dentaire, et/ou sur le tenon, un produit facilitant le "démoulage" de celui-ci tel que notamment de la vaseline. On est ainsi en possession d'un tenon dont les formes extérieures correspondent à celles du canal dentaire, à l'exception de quelques déformations dues au retrait du produit, au cours de son durcissement (ces déformations étant plus faibles que celles existant dans l'état antérieur de la technique, ainsi que mentionné précédemment). Si le durcissement du produit n'est pas terminé, il est possible de le faire à l'extérieur de la bouche du patient, notamment dans un four. Il est ainsi possible suivant l'invention de ne conférer au tenon ainsi formé que la dureté suffisante permettant son retrait sans déformation, puis l'étape de durcissement est achevée à l'extérieur de la bouche du patient avec des moyens connus de la technique qui permettent d'obtenir une dureté optimale du tenon. Dans une dernière étape, on procède au scellement du tenon dans la cavité dentaire, de façon classique, au moyen d'un produit de scellement. Pour ce faire, ce produit pourra être disposé à la fois dans le canal et en périphérie du tenon, si bien que les quelques vides laissés par le faible retrait du produit pourront ainsi être facilement compensés.

Dans un autre mode de mise en oeuvre de l'invention représenté sur la figure 4 le tenon 5 comporte une âme rigide 7 formée de fibres longues transparentes 11 qui s'étendent sur toute sa longueur. Ces fibres 11 longues confèrent au tenon la rigidité qui est nécessaire à sa mise en place dans le canal dentaire 3. Des rétentions 13, obtenues notamment par usinage, ont été réalisées autour de l'âme 7 de façon à créer sur la périphérie de celle-ci des aspérités favorisant l'accrochage du produit durcissable 9.

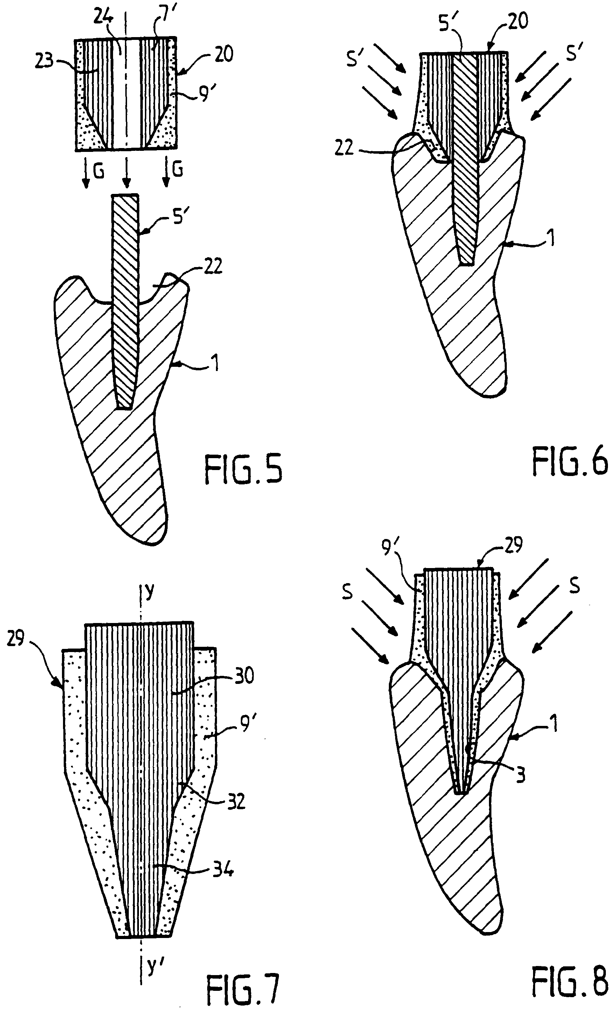

Ainsi que représenté sur les figures 5 et 6, le renfort suivant l'invention peut également être constitué d'un faux moignon 20, qui est destiné à prendre place sur un tenon 5' fixé dans une dent 1. A cet effet la partie supérieure de la dent 1 entourant le tenon 5 est creusée d'une cavité 22 destinée à recevoir la base du faux moignon 20.

Ce dernier est constitué d'une âme rigide 23 dont la partie inférieure est de forme tronconique et qui est creusé d'un canal axial et longitudinal 24, d'un diamètre interne correspondant au diamètre externe du tenon 5', de façon que le faux moignon 20 puisse s'enfiler sur celui-ci. La périphérie 9' du faux moignon 20 est recouverte d'un produit 9' apte à fluer et qui possède la propriété de durcir sous l'action d'un rayonnement lumineux et notamment d'un rayonnement visible ou ultraviolet, du type de celui utilisé dans le mode de mise en oeuvre précédent. Ce produit s'étend sur toute la hauteur du faux moignon 20, si bien que la forme externe de celui-ci est une forme cylindrique et que sa partie inférieure comporte une plus grande quantité du produit durcissant 9'.

Dans ces conditions la mise en place sur la dent du faux moignon 20 s'effectue ainsi que précisé ci-après.

Le faux moignon 20 est enfilé sur le tenon 5', de façon que son canal axial 24 reçoive celui-ci, et est fortement appliqué contre la dent 1, en exerçant un effort dans le sens des flèches G, si bien que, sous cet effort, le produit 9' flue et remplit l'espace compris entre les parois externes de la cavité 22 et celles du faux moignon 20. Comme mentionné précédemment, on éclaire ensuite le produit 9' à l'aide d'un rayonnement lumineux, notamment un rayonnement visible ou éventuellement ultraviolet, de façon à le faire durcir.

Dans une variante de mise en oeuvre, représentée sur les figures 7 et 8, un renfort 29 suivant l'invention est constitué à la fois d'un tenon scellé dans la dent et d'un faux moignon. Ainsi, sur la figure 7 le renfort 29 est constitué d'une âme centrale formée d'une partie supérieure cylindrique 30 suivie d'une partie tronconique 32 qui se prolonge vers le bas par une seconde partie tronconique 34 moins inclinée que la partie tronconique 32 par rapport à l'axe longitudinal yy' du renfort 29. La périphérie de celui-ci est recouverte d'un produit durcissable 9' possédant les propriétés telles que définies précédemment dans les deux exemples décrits. Dans ces conditions, la mise en place du renfort 29 se réalise ainsi que décrit ci-après.

Après avoir dégagé le canal dentaire 3 de la dent 1, on introduit à force le renfort 29 dans celui-ci, si bien qu'au cours de cet effort le produit durcissable 9' flue et remplit les cavités comprises entre le canal dentaire 3, la cuvette 22 de la dent 1 et la partie centrale du renfort 29. Comme précédemment, cette mise en place étant effectuée, on éclaire le produit durcissable 9' au moyen d'une source de lumière visible S de façon à le faire durcir.

Suivant l'invention, le produit durcissable peut également être constitué d'un produit autopolymérisable sous l'action d'autres moyens qu'un rayonnement lumineux. Le produit peut ainsi être durcissable sous l'effet d'une élévation de température et notamment d'une température se situant au niveau de la température normale du corps humain. Le durcissement obtenu peut également être total, ou partiel, ainsi qu'exposé précédemment.

Dans un mode de mise en oeuvre de l'invention les moyens de rigidité longitudinale sont constitués par le produit durcissable pourvu à cet effet, en sa partie centrale et sur toute sa longueur, de fibres longues qui sont noyées dans celui-ci.

Dans un autre mode de mise en oeuvre de l'invention, les moyens de rigidité longitudinale comportent des fibres optiques dans l'axe central.

Par ailleurs le produit durcissable pourra contenir des fibres qui comme les charges permettront de contrôler ses qualités de fluage. Ces fibres pourront être des fibres courtes, notamment à disposition aléatoire ou des fibres longues à disposition longitudinale, ou encore enroulées autour de l'âme rigide du renfort.

## Revendications

1. Renfort dentaire définitif destiné à être mis en place, notamment dans une cavité dentaire (3,22), du type comportant une âme rigide longitudinale (7,7',11,30), dont au moins la partie destinée à être fixée dans ladite cavité (3,22), est revêtue, au moins en périphérie, d'un produit durcissable (9,9') apte à adhérer à l'âme caractérisé en ce que le produit est apte à fluer sous l'action d'une contrainte, de façon à épouser la forme des parois de la cavité (3,22) dans laquelle il est mis en place, ce produit étant apte à durcir, après son introduction dans ladite cavité (3,22), de façon que ledit renfort soit apte à être retiré de ladite cavité.

2. Renfort suivant la revendication 1 caractérisé en ce qu'il est constitué d'un tenon dentaire (5).

3. Renfort suivant la revendication 1 caractérisé en ce qu'il est constitué d'un faux moignon dentaire (20).

4. Renfort suivant l'une des revendications 1 ou 2 caractérisé en ce qu'il comporte une partie antérieure (34) formant tenon, destinée à prendre place dans le canal (3) d'une dent (1), et une partie postérieure (30) formant un faux moignon dentaire.

5. Renfort suivant l'une des revendications précédentes caractérisé en ce que les moyens de rigidité longitudinale (7,7',11,30) sont constitués d'un noyau formé notamment de fibres longues (11) transparentes, telles que des fibres de verre ou de quartz noyées dans une résine de synthèse.

6. Renfort suivant la revendication 5 caractérisé en ce que les moyens de rigidité longitudinale comportent des fibres optiques.

7. Renfort suivant l'une quelconque des revendications précédentes caractérisé en ce que le produit durcissable (9,9') est un produit photopolymérisable.

8. Renfort suivant l'une des revendications 1 à 7 caractérisé en ce que le produit durcissable est un produit thermopolymérisable.

9. Renfort suivant l'une quelconque des revendications précédentes caractérisé en ce que le produit durcissable comporte des charges.

10. Renfort suivant la revendication 9 caractérisé en ce que les charges sont constituées de fibres courtes.

11. Renfort suivant la revendication 9 caractérisé en ce que les charges sont constituées de fibres longues.

12. Renfort suivant la revendication 11 caractérisé en ce que les fibres longues sont enroulées autour des moyens de rigidité longitudinale.

13. Procédé de fabrication d'un renfort dentaire dans une cavité dentaire, comportant les étapes suivantes :
- recouvrir, au moins en périphérie un élément rigide longitudinal avec un produit durcissable caractérisé en ce qu'il est en mesure de fluer sous l'action d'une contrainte,
- disposer ledit renfort ainsi constitué à l'intérieur de la cavité de façon à faire fluer ledit produit sous l'action de la contrainte résultant de la mise en place du renfort dans la cavité, de façon que celui-ci épouse la forme des parois de la cavité dans laquelle il est mis en place,
- provoquer un durcissement au moins partiel dudit produit,
- retirer de la cavité ledit renfort.

14. Procédé de fabrication suivant la revendication 13 caractérisé en ce que l'on complète ledit durcissement, après le retrait du renfort de la cavité, notamment dans un four.

## Claims

1. Definitive dental reinforcement intended to be placed in position, in particular in a dental cavity (3, 22), of the type comprising a longitudinal rigid core (7, 7', 11, 30), of which at least that part intended to be fixed in said cavity (3, 22) is coated, at least on the periphery, with a hardenable product (9, 9') adapted to adhere to the core, characterized in that this product is adapted to creep under the action of a stress, so as to follow the shape of the walls of the cavity (3, 22) in which it is placed in position, this product being adapted to harden, after having been introduced in said cavity (3, 22), so that said reinforcement is adapted to be withdrawn from said cavity.

2. Reinforcement according to Claim 1, characterized in that it is constituted by a dental post (5).

3. Reinforcement according to Claim 1, characterized in that it is constituted by a false dental stump (20).

4. Reinforcement according to one of Claims 1 or 2, characterized in that it comprises an anterior part (34) forming post, intended to be positioned in the canal (3) of a tooth (1), and a posterior part (30) forming a false dental stump.

5. Reinforcement according to one of the preceding Claims, characterized in that the longitudinal rigidity means (7, 7', 11, 30) are constituted by a core formed in particular by long transparent fibers (11), such as glass or quartz fibers embedded in a synthetic resin.

6. Reinforcement according to Claim 5, characterized in that the longitudinal rigidity means comprise optical fibers.

7. Reinforcement according to any one of the preceding Claims, characterized in that the hardenable product (9, 9') is a photopolymerizable product.

8. Reinforcmeent according to one of Claims 1 to 7, characterized in that the hardenable product is a thermopolymerizable product.

9. Reinforcement according to any one of the preceding Claims, characterized in that the hardenable product comprises fillers.

10. Reinforcement according to Claim 9, characterized in that the fillers are constituted by short fibers.

11. Reinforcement according to Claim 9, characterized in that the fillers are constituted by long fibers.

12. Reinforcement according to Claim 11, characterized in that the long fibers are wound around the longitudinal rigidity means.

13. Process for producing a dental reinforcement in a dental cavity, comprising the following steps:
- coating, at least on the periphery, a longitudinal rigid element with a hardenable product,
characterized in that it is able to creep under the action of a stress,
- arranging said reinforcement thus constituted inside the cavity so as to cause said product to creep under the action of the stress resulting from the positioning of the reinforcement in the cavity, so that said reinforcement follows the shape of the walls of the cavity in which it is placed in position,
- causing an at least partial hardening of said product,
- withdrawing said reinforcement from the cavity.

14. Process of production according to Claim 13, characterized in that said hardening is completed, after the reinforcement has been withdrawn from the cavity, in particular in an oven.

## Patentansprüche

1. Festsetzende Dentalverstärkung, dazu bestimmt, insbesondere in einen dentalen Hohlraum (3, 22) eingesetzt zu werden, vom Typ mit einem starren länglichen Kern (7, 7', 11, 30), von dem mindestens der Abschnitt, der dazu bestimmt ist, in der Höhle (3, 22) befestigt zu werden, zumindest an der Peripherie mit einem härtbaren Produkt (9, 9') überzogen ist, das geeignet ist, an dem Kern zu haften,
dadurch gekennzeichnet, daß dieses Produkt geeignet ist, unter der Wirkung einer mechanischen Spannung zu fließen, so daß es sich an die Form der Wände des Hohlraums (3, 22) anschmiegt, in welchem es eingesetzt ist, wobei dieses Produkt geeignet ist, nach seiner Einführung in den Hohlraum (3, 22) hart zu werden, so daß die Verstärkung geeignet ist, aus dem Hohlraum herausgenommen zu werden.

2. Verstärkung nach Anspruch 1,
dadurch gekennzeichnet, daß sie aus einem Zahnstift (5) gebildet ist.

3. Verstärkung nach Anspruch 1,
dadurch gekennzeichnet, daß sie aus einem falschen Zahnstumpf (20) gebildet ist.

4. Verstärkung nach Anspruch 1 oder 2,
dadurch gekennzeichnet, daß sie einen vorderen Abschnitt (34), der den Stift bildet, dazu bestimmt, in dem Kanal (3) eines Zahns (1) aufgenommen zu werden, und einen hinteren Abschnitt (30) aufweist, der einen falschen Zahnstumpf bildet.

5. Verstärkung nach einem der vorstehenden Ansprüche,
dadurch gekennzeichnet, daß die Mittel (7, 7', 11, 30) zur Längsversteifung aus einem Kern gebildet sind, der insbesondere aus transparenten langen Fasern (11) wie Glasfasern oder Quartzfasern gebildet ist, die in einem Syntheseharz eingebettet sind.

6. Verstärkung nach Anspruch 5,
dadurch gekennzeichnet, daß die Mittel zur Längsversteifung optische Fasern bzw. Lichtleitfasern aufweisen.

7. Verstärkung nach irgendeinem der vorstehenden Ansprüche,
dadurch gekennzeichnet, daß das härtbare Produkt (9, 9') ein photopolymerisierbares Produkt ist.

8. Verstärkung nach einem der Ansprüche 1 bis 7,
dadurch gekennzeichnet, daß das härtbare Produkt ein thermopolymerisierbares Produkt ist.

9. Verstärkung nach irgendeinem der vorstehenden Ansprüche,
dadurch gekennzeichnet, daß das härtbare Produkt Füllstoffe aufweist.

10. Verstärkung nach Anspruch 9,
dadurch gekennzeichnet, daß die Füllstoffe aus kurzen Fasern gebildet sind.

11. Verstärkung nach Anspruch 9,
dadurch gekennzeichnet, daß die Füllstoffe aus langen Fasern gebildet sind.

12. Verstärkung nach Anspruch 11,
dadurch gekennzeichnet, daß die langen Fasern um die Längsversteifungsmittel herum geschlungen sind.

13. Verfahren zur Herstellung einer Dentalverstärkung in einem dentalen Hohlraum, welches Verfahren folgende Schritte aufweist:
- zumindest an der Peripherie ein starres längliches Element mit einem härtbaren Produkt zu bedecken, dadurch gekennzeichnet, daß es in der Lage ist, unter der Wirkung einer mechanischen Spannung zu fließen,
- die auf diese Weise gebildete Verstärkung im Innern des Hohlraums so anzuordnen, daß das Produkt unter der Wirkung der mechanischen Spannung fließt, die aus dem Einsetzen der Verstärkung in den Hohlraum resultiert, so daß sich die Verstärkung an die Form der Wände des Hohlraums anschmiegt, in welchen sie eingesetzt ist,
- eine zumindest teilweise Verfestigung des Produktes herbeizuführen,
- die Verstärkung aus dem Hohlraum herauszunehmen.

14. Herstellungsverfahren nach Anspruch 13,
dadurch gekennzeichnet, daß die Verfestigung nach dem Herausnehmen der Verstärkung aus dem Hohlraum insbesondere in einem Ofen komplettiert wird.
